## Europäisches Patentamt

## European Patent Office

## Office européen des brevets

(19)

(11) Publication number: **0 373 751 B1**

## EUROPEAN PATENT SPECIFICATION

(12)

(45) Date of publication of patent specification: **16.03.94**    (51) Int. Cl.5: **F16F 9/30**

(21) Application number: **89309890.5**

(22) Date of filing: **28.09.89**

(54) **Viscoelastic damping structure and related manufacturing method.**

(30) Priority: **09.12.88 US 282728**

(43) Date of publication of application:
**20.06.90 Bulletin 90/25**

(45) Publication of the grant of the patent:
**16.03.94 Bulletin 94/11**

(84) Designated Contracting States:
**DE FR GB**

(56) References cited:
**EP-A- 0 033 771        EP-A- 0 176 147
FR-A- 2 382 622        GB-A- 1 028 884
GB-A- 2 180 318        US-A- 4 065 340
US-A- 4 786 343**

**PATENT ABSTRACTS OF JAPAN vol. 11, no.
48 (M-561)(2495) 13 February 1987**

(73) Proprietor: **TRW INC.
1900 Richmond Road
Cleveland Ohio 44124(US)**

(72) Inventor: **Bronowicki, Allen John
26 Ponders End
Laguna Niguel California 92677(US)**

(74) Representative: **Allden, Thomas Stanley et al
A.A. THORNTON & CO.
Northumberland House
303-306 High Holborn
London WC1V 7LE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

BACKGROUND OF THE INVENTION

This invention relates generally to damped mechanical structures and methods of their manufacture, and, more particularly, to damped structures employing viscoelastic materials (VEM). There are a number of applications of mechanical structures in which there is a requirement to damp out oscillations caused by varying mechanical loads, either axial loads, bending and shear loads, or torsional loads. A particularly important category of applications includes structures for use in aerospace vehicles. In these applications, there are three major requirements: stiffness, lightness in weight, and the ability to absorb energy by damping any oscillations that would otherwise be present. Fiber composite materials can easily satisfy the stiffness and weight requirements, but the design of an appropriate self-damping structure is more difficult to achieve.

Viscoelastic materials offer an efficient means of dissipating energy. Although these materials have poor stiffness, they provide an energy dissipative effect in direct proportion to the elastic force applied to them. Since a viscoelastic material is soft, it is typically made in thin layers and held between constraining layers of stiffer elastic materials. Relative motion of the elastic layers induces a shear load in the viscoelastic material and thereby dissipates energy. This is known as constrained layer damping, and is generally limited to damping flexual motions of the damped member.

Another prior approach to viscoelastic damping is series damping. In a series damper, the entire load in a member is made to pass as a shear load through the viscoelastic material. This allows the dissipation of a large amount of energy, but no elastic load path is provided through the soft viscoelastic material. Also, failures can often occur in series damping viscoelastic materials, and surface sealing of the material can be difficult. Sealing is important because many viscoelastic materials are inherently unstable and, if not sealed from exposure to the environment, will "outgas" vapors from their surface. This process not only degrades the desirable elastomeric properties of the materials, but also contaminates other materials in the near vicinity. Accordingly, a sealing layer is usually provided over viscoelastic materials, to minimize exposure to sunlight and oxygen.

A variation of the constrained layer approach is to employ a segmented constraining layer, to allow extensional and flexural motions to be damped. This is discussed in "Constrained Layer Damping Effectiveness of Members under Vibratory Extensional Loading," by Stanley S. Sattinger, presented at the ASME Design Engineering Conference in Cincinnati, Ohio, 1985, paper No. 85-DET-134. The segmented constraint can dissipate only a limited amount of energy, as the underlying elastic structure will always carry a significant portion of the load. Moreover, discontinuities at the ends of the segmented constraining layers can give rise to peeling stresses, and require additional actions to be taken to seal the viscoelastic material.

It will be appreciated from the foregoing that there is still considerable room for improvement in damping structures of the general type described. Specifically, what is needed is a structure in which mechanical loads are carried through conventional elastic materials for desired stiffness, strength and mechanical stability, but in which a significant proportion of the mechanical energy of dynamic loads is transmitted into a viscoelastic material for a desired level of damping. This combination has, prior to the present invention, eluded designers of damping structures.

SUMMARY OF THE INVENTION

The present invention resides in a composite structure of viscoelastic and elastic materials, in which dynamic loads are directed along a path that passes repeatedly through a viscoelastic layer, to maximize damping in the structure. In terms of a novel structure, the invention comprises a layer of viscoelastic material, two segmented layers of a first elastic material disposed one on each side of the layer of viscoelastic material, and two layers of a second elastic material, also disposed one on each side of the viscoelastic material and in contact with respective ones of the segmented layers. Each segmented layer has alternating segments and gaps, such that the segments of one such layer partially overlap the segments of the other layer, and the first elastic material has strength and stiffness in a direction corresponding to an intended direction of load transmission through the structure. The second elastic material has low strength and stiffness in the load direction. Dynamic loads in the intended direction of load transmission pass back and forth between the two segmented layers and through the layer of viscoelastic material, to damp the dynamic loads.

2

In one preferred embodiment of the invention, the structure is tubular and all of the layers are annular. In the preferred embodiment, the two layers of the second elastic material are continuous layers in contact with the viscoelastic material layer, and the two segmented layers are formed in contact with the two layers of the second elastic material. In one form of the structure, the segmented layers include predominantly axially oriented fibers, for transmitting axial loads, and the two layers of the second elastic material have low strength and stiffness in the axial direction. Such low strength and stiffness may be achieved by selecting the second elastic material to include fibers that are predominantly aligned in directions inclined to the longitudinal axis of the structure. Alternatively, a soft material such as a metal could be used as the second elastic material.

Another form of the structure is designed for transmitting shear or torsional loads, and the segmented layers include predominantly non-axially oriented fibers, for transmitting shear loads. The two layers of the second elastic material have low strength and stiffness in a direction transverse to the longitudinal axis of the structure. This may be achieved by means of fibers that are predominantly aligned parallel to the longitudinal axis of the structure.

Another form of the structure is that of a beam, of which the cross-section is other than tubular. Similar principles are employed to provide a path through a viscoelastic layer for dynamic loads applied to the beam.

In accordance with one aspect of the invention, the gaps between segments of the segmented layers have a gap length equal to a multiple of a theoretical shear lag length, which is an axial distance required for stress transfer from a segment of one of the segmented layers to an adjacent layer of the second elastic material. In addition, the segments of one segmented layer overlap the segments of the other segmented layer by an overlap length that is also a multiple of the lag length. In one disclosed embodiment, the gap length is approximately three times the lag length and the overlap length is approximately twice the lag length.

The related method of the invention includes the steps of placing annular spacers on a cylindrical mandrel, forming an inner segmented layer on the mandrel in regions between the spacers, forming an inner continuous layer over the inner segmented layer, and curing the resulting structure of inner segmented and continuous layers. The next step is that of laying a viscoelastic layer over the cured inner continuous layer. The next step is that of forming a thin sealing layer over the viscoelastic layer. The thin sealing layer may be of Kapton, for example, and its purpose is to prevent melting of the viscoelastic layer, or merging of the viscoelastic layer with adjacent layers during subsequent curing of the structure. The next steps are forming an outer continuous layer over the sealing layer, optionally placing additional annular spacers over the structure, forming an outer segmented layer over the outer continuous layer and between the optional additional spacers, curing the entire structure, and removing the mandrel and the annular spacers.

The invention may also be viewed as a process for damping dynamic loads in a structure having a viscoelastic layer, two segmented elastic layers of material of high stiffness and strength in a desired loading direction, and two continuous elastic layers of low stiffness and strength in the desired loading direction. In this sense, the invention includes the steps of applying a dynamic load to the structure in the desired loading direction; conducting the dynamic load forces generally in the desired loading direction, back and forth between the two segmented layers, through portions of the continuous layers and the viscoelastic layer; dissipating dynamic load energy in the viscoelastic layer; and providing at least one path for the conduction of static loads in the loading direction.

It will be appreciated from the foregoing that the present invention represents a significant advance in the field of viscoelastic damping structures. In particular, the use of overlapping segmented elastic layers in conjunction with a viscoelastic layer and additional elastic layers, results in the establishment of a path for dynamic loads that necessarily passes repeatedly through the viscoelastic layer, thereby maximizing the damping effect. Other aspects and advantages of the invention will become apparent from the following more detailed description, taken in conjunction with the accompanying drawings.

## BRIEF DESCRIPTION OF THE DRAWINGS

FIGURE 1 is a fragmentary cross-sectional view of a tubular viscoelastic material structure of the prior art;

FIG. 2 is a cross-sectional view of a tubular viscoelastic material structure in accordance with the present invention, intended for damping axial loads;

FIG. 3 is a cross-sectional view similar to FIG. 2, but intended for damping torsional loads;

FIG. 4 is a cross-sectional view of an I-beam structure using a viscoelastic material in accordance with the present invention;

FIG. 5 is a cross-sectional view of the I-beam structure of FIG. 4, taken substantially along the line 5-5; and

FIG. 6 is a cross-sectional view similar to FIG. 2, illustrating the method of fabrication of the structure.

## DESCRIPTION OF THE PREFERRED EMBODIMENTS

As shown in the drawings for purposes of illustration, the present invention is concerned with damping structures using viscoelastic or similar materials. Damping structures are useful in a variety of applications, but particularly in aircraft and spacecraft, which typically must be light in weight, strong and rigid enough to support static loads, and able to absorb energy from dynamic loads of various types.

Viscoelastic polymers have mechanical damping properties that vary with the frequency of a dynamically applied load, and also vary with temperature. In simple terms, these materials exhibit greater stiffness when a mechanical load is applied to them at a greater frequency. For static or slowly varying loads, the materials are soft and tend to "creep" under the application of load. Viscoelastic materials are ideal components in mechanical structures that are subject to vibrational loads, which may be extensional or shear loads. If the loads can be directed into the viscoelastic materials, the increased stiffness provided will dissipate energy and effectively damp the vibrations. A major difficulty is to design a structure with an appropriate combination of viscoelastic material and conventional elastic material. Since viscoelastic materials are virtually incapable of supporting a static load, a static load path must be provided through conventional elastic materials.

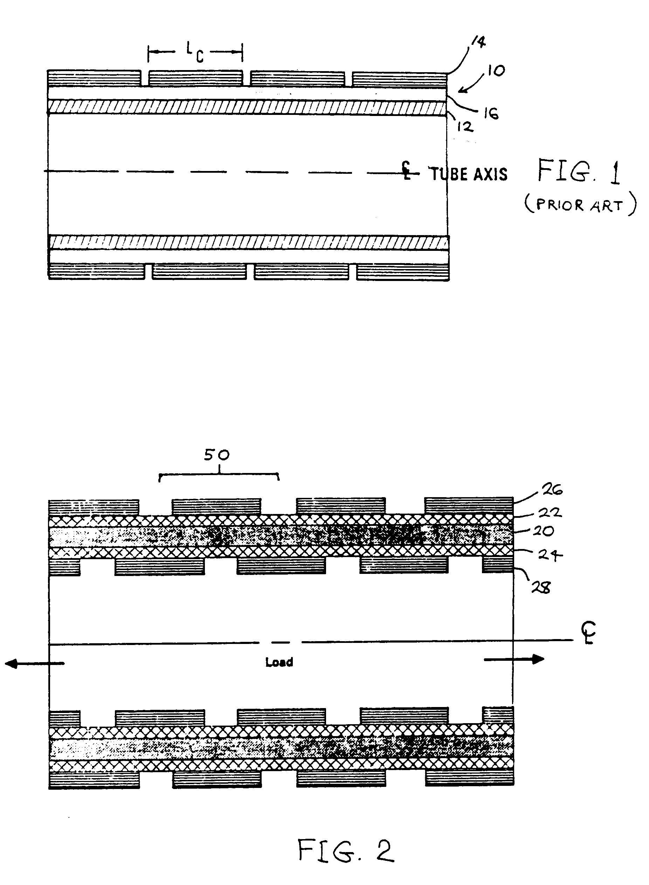

FIG. 1 illustrates one approach of the prior art, as used in a tubular structural element, indicated by reference numeral 10, subject to axial loading. The tubular element 10 includes three concentric layers: an inner layer 12, a segmented outer constraint layer 14, and an intermediate layer 16 of viscoelastic material. The inner and outer layers 12 and 14 are of conventional elastic materials, which deform elastically in response to an applied load, in a uniform and usually linear manner.

The following comments concerning the selection of elastic and viscoelastic materials apply both to the present invention and to prior art structures such as the one shown in FIG. 1. In the type of light-weight aerospace structures to which the invention may be usefully applied, these elastic materials consist of fibers bound together by a matrix. The fibers may be, for example, graphite, fiberglass, boron, or Kevlar. Graphite fibers include pitch based materials designated, for example, P-75, P-100, and P-120, and PAN based materials designated, for example, GY-70 and T300. The matrix material may be an epoxy, such as Fiberite 934, or a thermoplastic resin, such as PEEK (poly-ether-ether-ketone). A metal matrix may also be used, such as aluminum, copper or magnesium. In general, the matrix materials have only a minor influence on the mechanical properties of the elastic components, and the fibers carry 95% or more of the mechanical load. An exception is in metal matrix composites (MMC), in which the metal binding the fibers adds considerable stiffness and strength, both parallel to and transverse to the fibers.

The fibers of the elastic materials may be laid in any desired orientation, or in a suitable mix of orientations. Since the fibers are largely responsible for the conduction of load through the materials, the selection of orientation is an important factor in the design of the structure. A "normal" layup of an elastic component of this type includes a mix of fibers laid in different orientations, so that the material has desired stiffness and strength in two directions in the plane of the material. Stiffness and strength can dominate in a preferred direction, but must also be provided to a degree in the transverse direction. In the tubular structure of the prior art shown in FIG. 1, the inner layer 12 is of a material of such a normal layup. On the other hand, the outer segmented layer 14 has fibers aligned only in the axial direction, as indicated in the drawing by the shading of this layer. The outer layer 14 is, therefore, capable of transferring loads only in the axial direction. When subjected to transverse shear forces, as in the transmission of a torsional load, the outer layer 14 provides little, if any, stiffness or strength.

The viscoelastic material in layer 16 may be selected from various rubbers or plastics, such as PVC (polyvinyl chloride); adhesives, such as Scotchdamp SJ2015X or SJ2052X polymers manufactured by the 3M Company, St. Paul, Minnesota; or silicones, such as Densil, manufactured by Flexcon, Inc. The material and its thickness are chosen for optimum operation at the expected temperature and frequency of vibration.

The structure of FIG. 1 transmits static axial loads primarily through the inner elastic layer 12, since the viscoelastic layer 16 will transmit little, if any, static load and the outer layer is axially discontinuous. Under dynamic loading, however, the viscoelastic layer 16 becomes stiffer and, although some of the load will continue to be transmitted through the inner layer 12, a substantial proportion of the load will be transmitted alternately by the viscoelastic layer 16 and segments of the outer layer 14. Because the outer layer 14 is segmented, axially transmitted loads are forced to take a path through the viscoelastic layer 16, which provides a desired damping effect. Although this arrangement produces damping, it still leaves an unimpeded, and undamped, load path through the inner elastic layer 12.

The structure of the present invention as embodied in the tubular construction of FIG. 2 includes a viscoelastic layer 20, adjacent "soft" elastic layers 22 and 24, one on each side of the viscoelastic layer, and segmented outer and inner elastic layers 26 and 28. The soft elastic layers need only be soft in the direction of the applied load. For example, as indicated in FIG. 2 the soft elastic layers 22 an 24 may include fibers or plies that are angularly oriented, at approximately 45 degrees to the axial direction. An axial load applied to the inner or the outer segmented layer 26, 28 will encounter alternately stiff material, in the axially aligned plies of layers 26, 28, and soft material, in the soft elastic layers 22, 24 in gaps between the segments of layers 26, 28. Another important feature is that the segments of layers 26, 28 are overlapped or staggered, such that any gap in one of the segmented layers is not radially aligned with a gap in the other segmented layer.

In static loading, the tube of FIG. 2, provides two parallel axial load paths. One passes through the outer segmented layer 26 and the soft elastic layer 22, and the other passes through the inner segmented layer 28 and the soft elastic layer 24. Any static shear or torsional loads will be transmitted directly through the continuous soft elastic layers 22, 24. In dynamic loading, a small proportion of the load is still carried along these paths, but because the viscoelastic material 20 exhibits increased stiffness, a large proportion of the load is transmitted back and forth from one segmented elastic layer 26, 28 to the other, through the intervening soft elastic layers 22, 24 and the viscoelastic layer 20. Because the bulk of the load is forced through the viscoelastic layer 20, the damping effect of this material is fully utilized and the desired damping of vibrational loads is achieved.

In theory, it is possible to reverse the positions of the segmented layers 26, 28 and the soft elastic layers 22, 24, placing the segmented layers in direct contact with the viscoelastic material and the soft layers over the segmented layers. There would still be static load paths through the segmented and soft elastic layers, and the dynamic load would alternate between segmented layers, through the viscoelastic material. However, the embodiment illustrated in FIG. 2 is more practical for at least two reasons. First, the soft layers 22, 24 placed next to the viscoelastic material provide protection and sealing of the viscoelastic material, and second, it would be desirable to avoid placing the sharp discontinuities of the segmented layers 26, 28 in contact with the viscoelastic material.

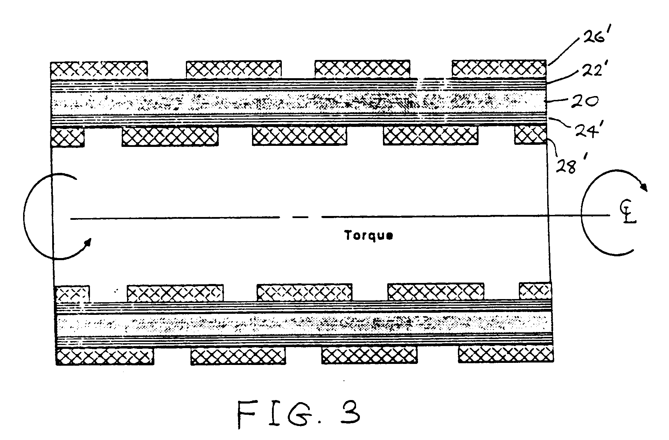

From this example, it will be appreciated that similar principles may be applied to other types of loading conditions. FIG. 3 shows the invention as applied to the damping of torsional loads. The structure is similar to that of FIG. 2, except that the ply directions in the elastic layers is reversed. The structure includes the viscoelastic material layer 20, soft elastic layers 22′, 24′ and outer and inner segmented elastic layers 26′, 28′. The "soft" elastic layers 22′, 24′ are in this case soft in the sense of an applied torsional load. They are shown as comprising axially aligned plies. The outer and inner segmented layers 26′, 28′ are selected to be stiff in the sense of transmitting torsional loads, and primarily include plies at an angle to the axis of the tubular structure. The continuous soft elastic layers 22′, 24′ also transmit any axial loads on the structure, but with little or no damping effect. Dynamic torsional loads are transmitted along the structure through the inner and outer segmented layers 26′, 28′ alternately, passing repeatedly through the energy absorbing viscoelastic layer 20.

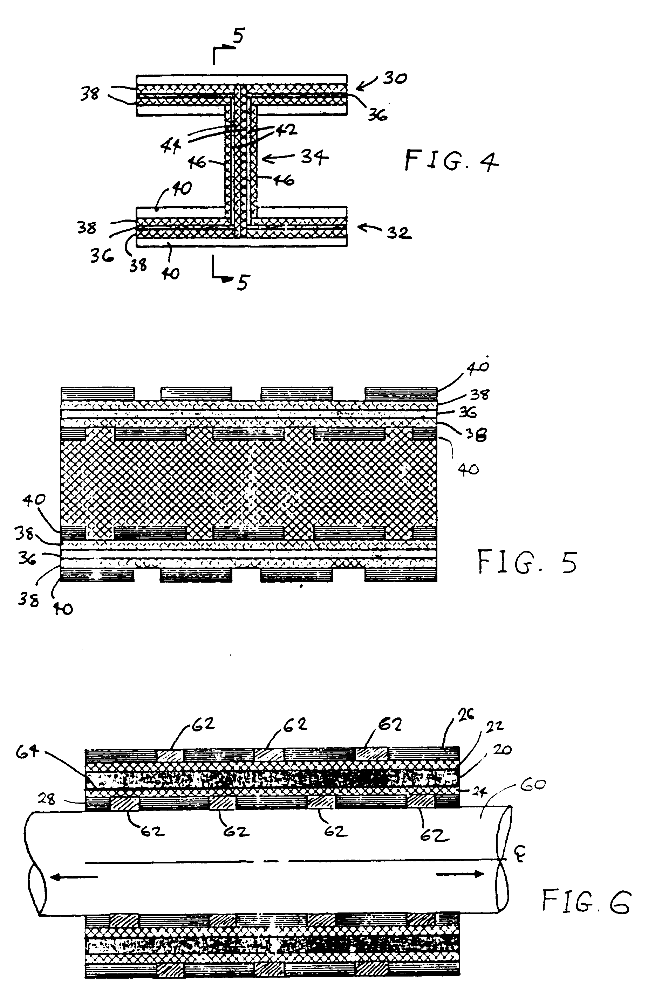

FIG. 4 shows the concept of the invention as applied to an I-beam structure comprising two flanges 30, 32 and an intermediate web 34. Each of the flanges has a central layer 36 of viscoelastic material, two adjacent layers 38 of elastic material having predominantly angled plies, and two outer segmented layers 40 of elastic material having predominantly axially aligned plies. The web element 34 is shown as including two layers 42 of viscoelastic material separated by two inner layers 44 of elastic material having predominantly angled plies, and surrounded by two outer layers 46 of the same material. The layers 42 of viscoelastic material are contiguous with the layers 36 in the flanges 30, 32. Optionally, the web viscoelastic layers 42 could be omitted for ease of manufacturing. As best seen in FIG. 5, the outer layers 40 of the flanges 30, 32 are segmented in such a manner that the gaps between segments on one face of a flange are not aligned with gaps between segments on the other face.

In static axial loading, the segmented layers 40 and the adjacent continuous layers 38 will transmit the load in both flanges. In dynamic axial loading, the viscoelastic material 36 will provide damping as the load is transmitted along the beam, through alternating segmented layers 40.

Depending on the application, it may not be necessary to provide the type of structure described along the full length of a structural member. For example, a structural member of stiff elastic material may be designed to include only a single discontinuity, at which loads are transmitted through an adjacent "soft" elastic material, then through a relatively short layer of viscoelastic material, into an overlapping layer of stiff

5

material, and back into a continuation of the original member. The portion of FIG. 2 indicated by 50, for example, shows such a structure, where the inner layer 28 is considered to be continuous in both directions from single break appearing in the portion 50, and the lengths of the continuous layers 22, 24 and of the viscoelastic layer 20 are approximately the same as the length of one segment of the outer layer 26.

Another important aspect of the invention is that tubular members embodying the principles of the invention may be conveniently manufactured using an improved process that is well suited for a graphite fiber structure. In accordance with the method, which will now be described for the axial load damping version of FIG. 2, segments of the inner layer 28 are first applied over a steel or aluminum mandrel, as shown at 60 in FIG. 6, with annular spacers 62 of Teflon or the like being first applied to the mandrel to form the segment spaces in the layer. Then the continuous "soft" layer 24 is applied over the inner layer 28, and the resultant structure is cured in an autoclave under increased temperature and pressure, or in a vacuum bag. Next the viscoelastic layer 20 is applied over the cured structure, and a thin layer of Kapton 64 is applied over the viscoelastic layer 20 to prevent it from melting into the fibers of the outer tube next to be formed. Then the angled plies of layer 22 are applied, and the segmented plies of the outer layer 26, optionally using further spacers 62. The whole tube is then cured as one part, and finally the mandrel 60 and spacers 62 are removed.

The method described allows the viscoelastic material layer to be embedded in the composite structure without its melting or merging with the adjacent graphite/epoxy layer of the outer tube. The Kapton layer 64 functions to seal and protect the viscoelastic layer during subsequent steps of the method, and permits the entire tube structure to be cured as one piece.

The specific dimensions chosen for a structure in accordance with the invention will be very much dependent on the application of the structure and the specific materials used. An important factor in the design is the axial tube length required to transfer load from a segment of the outer or inner layer 26, 28 to the continuous layer 22, 24 in the gap region between segments. This length is referred to as the decay length or the shear lag length, and is a function of axial modulus of the two elastic materials, the shear modulus of the viscoelastic material, and the thicknesses of the various layers. The decay length is given by the expression:

$$\tau = \sqrt{\frac{Eg\ tg\ tv}{Gv\ [1\ +\ (Eg\ tg)/(Ew\ tw)]}}$$

where:

Eg and Ew     are the axial modulus values in the 0° direction of the gap and wall, i.e. layers 22 and 26, respectively,

tg and tw     are the thicknesses of layers 22 and 26, respectively, and

tv and Gv     are the thickness and shear modulus of the viscoelastic layer 20.

For one tube structure built and tested, the decay length $\tau$ was computed to be approximately 1.27cm (0.5 inch). Good results were obtained by choosing the gap length Lg at $3\tau$ = 3.81cm (1.5 inch), and the overlap length Lo at $2\tau$ = 2.54cm (1.0 inch). The length of a single wall section of a segment is then Lw = 2Lo + Lg = 8.89cm (3.5 inches), and the periodic or cell length Lc = Lw + Lg = 12.7cm (5.0 inches).

The thickness, tv, of the viscoelastic material is chosen to give a desired value of $\tau$. The larger the thickness, the greater is the cell length. A longer cell length reduces fabrication costs, but too much thickness of the viscoelastic layer adds weight to the structure. The wall thickness, tw, is chosen to give a desired stiffness to the structure. The gap thickness, tg, is chosen to be as small as possible, unless needed for strength.

A comparison of two tubular structures, one in accordance with the invention (FIG. 2) and one following the teachings of the prior art (FIG. 1) predicted an energy absorption factor of 10% for the prior art device. That is to say, 10% of the dynamic load energy was absorbed into the viscoelastic material. The corresponding figure for the structure of the invention was 40%, indicating an improvement over the prior art structure by a factor of four.

It will be appreciated from the foregoing that the present invention represents a significant advance in the field of damping mechanical structures. In particular, the invention provides viscoelastic damping for various types of dynamically loaded members. The invention also provides a novel technique for fabricating a viscoelastic structural member.

## Claims

1.  A viscoelastic damping structure comprising a layer (20; 20'; 36) of viscoelastic material, two segmented layers (26, 28; 26', 28; 40, 40) of a first elastic material disposed one on each side of the layer (20; 20'; 36) of viscoelastic material, each segmented layer (26; 26'; 28; 40) having alternating segments and gaps such that the segments of one such layer (26; 26'; 40) partially overlap the segments of the other layer (28; 28; 40), the first elastic material having a desired strength and stiffness in a direction corresponding to an intended direction of load transmission through the structure, and two layers (22, 24; 22', 24; 38, 38) of a second elastic material also disposed one on each side of the layer (20; 20'; 26) of viscoelastic material and in contact with respective ones of the segmented layers (26, 28; 26', 28; 40, 40), the second elastic material having low strength and stiffness in the direction corresponding to the intended direction of load transmission through the structure, whereby the forces applied to such structure induce dynamic loads in the intended direction of load transmission which pass back and forth between the two segmented layers (26, 28; 26', 28; 40, 40) and through the layer (20; 20'; 36) of viscoelastic material, to dampen any vibrational motion introduced to the structure.

2.  A viscoelastic damping structure as claimed in claim 1, wherein the structure is tubular, and all of the layers (20, 22, 24, 26, 28, 20', 22', 26') are annular.

3.  A viscoelastic damping structure as claimed in claim 2, wherein the two layers (22, 24; 22', 24) of the second elastic material are continuous layers in contact with the viscoelastic material layer (20; 20') and the two segmented layers (26, 28; 26', 28) are formed in contact with the two layers (22, 24; 22', 24) of the second elastic material.

4.  A viscoelastic damping structure as claimed in claim 3, wherein the segmented layers (26, 28) include predominantly axially oriented fibers for transmitting axial loads, and the two layers (22, 24) of the second elastic material have low strength and stiffness in the axial direction.

5.  A viscoelastic damping structure as claimed in claim 4, wherein the two layers (22, 24) of the second elastic material include fibers that are predominantly aligned in directions inclined to the longitudinal axis of the structure.

6.  A viscoelastic damping structure as claimed in claim 3, wherein the segmented layers (26', 28) include predominantly non-axially oriented fibers for transmitting shear loads, and the two layers (22', 24) of the second elastic material have low strength and stiffness in a direction transverse to the longitudinal axis of the structure.

7.  A viscoelastic damping structure as claimed in claim 6, wherein the two layers (22', 24) of the second elastic material include fibers that are predominantly aligned in parallel to the longitudinal axis of the structure.

8.  A viscoelastic damping structure as claimed in claim 1, wherein the structure is a beam (30, 32, 34), the two layers (38, 38) of the second elastic material are continuous layers in contact with the viscoelastic material layer (36), and the two segmented layers (40, 40) are formed in contact with the two layers (38, 38) of the second elastic material.

9.  A viscoelastic damping structure as claimed in claim 8, wherein the segmented layers (40, 40) include predominantly axial oriented fibers for transmitting axial loads, and the two layers (38, 38) of the second elastic material have low strength and stiffness in the axial direction.

10. A viscoelastic damping structure as claimed in claim 9, wherein the two layers (38, 38) of the second elastic material include fibers that are predominantly aligned in directions inclined to the longitudinal axis of the structure (30, 32, 34).

11. A viscoelastic damping structure as claimed in any of the preceding claims, wherein the gaps between segments of the segmented layers (26, 28; 26', 28; 40, 40) have a gap length equal to a multiple of a theoretical lag length, which is an axial distance required for stress transfer from a segment of one of the segmented layers (26, 28; 26', 28; 40, 40) to the adjacent layer (22, 24; 22', 24; 38, 38) of the

EP 0 373 751 B1

second elastic material, and the segments of one segmented layer (26; 26'; 40) overlap the segments of the other segmented layer (28; 28; 40) by an overlap length that is also a multiple of the lag length.

**12.** A viscoelastic damping structure as claimed in claim 11, wherein the gap length is approximately three times the lag length, and the overlap length is approximately twice the lag length.

**13.** A process for damping dynamic loads in a viscoelastic structure having a viscoelastic layer (20; 20'; 36), two segmented elastic layers (26, 28; 26', 28; 40, 40) of material of high stiffness and strength in a desired loading direction, and two continuous elastic layers (22, 24; 22', 24; 38, 38) of low stiffness and strength in the desired loading direction, the process comprising the steps of applying a dynamic load to the structure in the desired loading direction, conducting the dynamic load forces generally in the direction of loading, and back and forth between the two segmented elastic layers (26, 28; 26', 28; 40, 40), through portions of the continuous elastic layers (22, 24; 22', 24; 38, 38) and through the viscoelastic layer (20; 20'; 36), dissipating dynamic load energy in the viscoelastic layer (20; 20'; 36) as a result of conducting the load forces repeatedly through the viscoelastic layer (20; 20'; 36), and providing at least one path for the conduction of static loads in the load direction.

**Patentansprüche**

**1.** Viskoelastische dämpfende Struktur mit einer Schicht (20; 20'; 36) aus viskoelastischem Material, zwei segmentierten Schichten (26, 28; 26', 28; 40, 40) aus einem ersten elastischen Material, wobei eine auf jeder Seite der Schicht (20; 20'; 36) aus viskoelastischem Material angeordnet ist, wobei jede segmentierte Schicht (26; 26'; 28; 40) abwechselnd Segmente und Spalten derart aufweist, daß die Segmente einer solchen Schicht (26; 26'; 40) die Segmente der anderen Schicht (28; 28; 40) teilweise überlappen, wobei das erste elastische Material eine gewünschte Festigkeit und Steifigkeit in einer Richtung aufweist, die mit einer beabsichtigten Lastübertragungsrichtung durch die Struktur übereinstimmt, sowie mit zwei Schichten (22, 24; 22', 24; 38, 38) eines zweiten elastischen Materials, wobei ebenfalls eines auf jeder Seite der Schicht (20; 20'; 26) des viskoelastischen Materials angeordnet ist und in Berührung mit einer entsprechenden der segmentierten Schichten (26, 28; 26', 28, 40, 40) steht, wobei das zweite elastische Material eine geringe Festigkeit und Steifigkeit in der Richtung aufweist, die mit der beabsichtigten Lastübertragungsrichtung durch die Struktur übereinstimmt, wodurch die auf diese Struktur aufgebrachten Kräfte dynamische Lasten in der beabsichtigten Lastübertragungsrichtung induzieren, die zwischen den zwei segmentierten Schichten (26, 28; 26', 28; 40, 40) und durch die Schicht (20; 20'; 36) aus viskoelastischem Material hin- und herverlaufen, um in die Struktur eingeführte Vibrationsbewegungen zu dämpfen.

**2.** Viskoelastische dämpfende Struktur nach Anspruch 1, in der die Struktur röhrenförmig und alle Schichten (20, 22, 24, 26, 28, 20', 22', 26') ringförmig sind.

**3.** Viskoelastische dämpfende Struktur nach Anspruch 2, in der die zwei Schichten (22, 24; 22', 24) des zweiten elastischen Materials kontinuierliche Schichten in Berührung mit der viskoelastischen Materialschicht (20; 20') und die zwei segmentierten Schichten (26, 28; 26', 28) in Berührung mit den zwei Schichten (22, 24; 22', 24) des zweiten elastischen Materials ausgebildet sind.

**4.** Viskoelastische dämpfende Struktur nach Anspruch 3, in der die segmentierten Schichten (26, 28) überwiegend axial orientierte Fasern zum Übertragen axialer Lasten beinhalten und die zwei Schichten (22, 24) des zweiten elastischen Materials eine geringe Festigkeit und Steifigkeit in der axialen Richtung aufweisen.

**5.** Viskoelastische dämpfende Struktur nach Anspruch 4, in der die zwei Schichten (22, 24) des zweiten elastischen Materials Fasern beinhalten, die vorwiegend in einer zur Längsachse der Struktur winkligen Richtung ausgerichtet sind.

**6.** Viskoelastische dämpfende Struktur nach Anspruch 3, in der die segmentierten Schichten (26', 28) überwiegend nicht axial orientierte Fasern zum Übertragen von Scherlasten beinhalten und die zwei Schichten (22', 24) des zweiten elastischen Materials eine geringe Festigkeit und Steifigkeit in einer Richtung quer zur Längsachse der Struktur aufweisen.

8

**7.** Viskoelastische dämpfende Struktur nach Anspruch 6, in der zwei Schichten (22', 24) des zweiten elastischen Materials Fasern beinhalten, die überwiegend parallel zur Längsachse der Struktur ausgerichtet sind.

**8.** Viskoelastische dämpfende Struktur nach Anspruch 1, in der die Struktur ein Träger (30, 32, 34) ist, die zwei Schichten (38, 38) des zweiten elastischen Materials kontinuierliche Schichten in Berührung mit der viskoelastischen Materialschicht (36) sind und die zwei segmentierten Schichten (40, 40) in Berührung mit den zwei Schichten (38, 38) des zweiten elastischen Materials ausgebildet sind.

**9.** Viskoelastische dämpfende Struktur nach Anspruch 8, in der die segmentierten Schichten (40, 40) überwiegend axial orientierte Fasern zur Übertragung axialer Lasten beinhalten und die zwei Schichten (38, 38) des zweiten elastischen Materials eine geringe Festigkeit und Steifigkeit in der axialen Richtung aufweisen.

**10.** Viskoelastische dämpfende Struktur nach Anspruch 9, in der die zwei Schichten (38, 38) des zweiten elastischen Materials Fasern beinhalten, die überwiegend in Richtungen geneigt zur Längsachse der Struktur (30, 32, 34) ausgerichtet sind.

**11.** Viskoelastische dämpfende Struktur nach einem der vorhergehenden Ansprüche, in der die Spalte zwischen Segmenter der segmentierten Schichten (26, 28; 26', 28; 40, 40) eine Spaltlänge gleich einem Mehrfachen einer theoretischer) Verzugslänge aufweisen, welches ein axialer Abstand ist, welcher zur Spannungsübertragung von einem Segment einer der segmentierten Schichten (26, 28; 26', 28; 40, 40) auf die anliegende Schicht (22, 24; 22', 24; 38, 38) des zweiten elastischen Materials erforderlich ist und die Segmente von einer segmentierten Schicht (26; 26'; 40) die Segmente der anderen segmentierten Schicht (28; 28; 40) um eine Überlappungslänge überlappen, die ebenfalls ein Vielfaches der Verzugslänge ist.

**12.** Viskoelastische dämpfende Struktur nach Anspruch 11, in der die Spaltlänge etwa das Dreifache der Verzugslänge und die Überlappungslänge etwa das Zweifache der Verzugslänge ist.

**13.** Verfahren zum Dämpfen dynamischer Lasten in einer viskoelastischen Struktur mit einer viskoelastischen Schicht (20; 20'; 36), zwei segmentierten elastischen Schichten (26, 28; 26', 28; 40, 40) eines Materials von hoher Steifigkeit und Festigkeit in einer gewünschten Lastrichtung und zwei kontinuierlichen elastischen Schichten (22, 24; 22', 24; 38, 38) von geringer Steifigkeit und Festigkeit in der gewünschten Lastrichtung, wobei das Verfahren die Schritte Aufbringen einer dynamischen Last auf die Struktur in der gewünschten Lastrichtung, Durchführen der dynamischen Lastkräfte im wesentlichen in der Richtung der Last sowie vor und zurück zwischen den segmentierten elastischen Schichten (26, 28; 26', 28; 40, 40), durch Abschnitte der kontinuierlichen elastischen Schichten (22, 24; 22', 24; 38, 38) und durch die viskoelastische Schicht (20, 20'; 36), Verteilen der dynamischen Lastenergie in der viskoelastischen Schicht (20; 20'; 36) als ein Ergebnis des Durchführens der Lastkräfte in wiederholter Weise durch die viskoelastische Schicht (20; 20'; 36) und Bereitstellen mindestens eines Weges zur Durchführung der statischen Lasten in der Lastrichtung umfaßt.

**Revendications**

**1.** Structure d'amortissement viscoélastique comprenant une couche (20; 20'; 36) en un matériau viscoélastique, deux couches segmentées (26, 28; 26', 28; 40, 40) d'un premier matériau élastique disposée à raison d'une de chaque côté de la couche (20; 20'; 36) du matériau viscoélastique, chaque couche segmentée (26; 26'; 28; 40) comprenant des segments et des interstices alternatifs tels que les segments de l'une de ces couches (26, 26'; 40) recouvre en partie les segments de l'autre couche (28; 28; 40), le premier matériau élastique présentant ta rigidité et la résistance désirées dans une direction correspondant à une direction prévue pour une transmission de charge à travers la structure, et deux couches (22, 24; 22', 24; 38, 38) d'un second matériau élastique également disposées à raison d'une de chaque côté de la couche (20; 20'; 26) du matériau viscoélastique et en contact avec des couches segmentées respectives (26, 28; 26', 28; 40, 40), le second matériau élastique présentant une faible rigidité et une faible résistance dans la direction correspondant à la direction prévue pour la transmission de la charge à travers la structure, les forces appliquées à cette structure induisant des charges dynamiques dans la direction prévue de la transmission de charge qui se déplace en va-et-vient entre les deux couches segmentées (26, 28; 26', 28; 40, 40) et à travers la couche (20; 20'; 36) de matériau viscoélastique pour amortir tout mouvement vibratoire introduit dans la structure.

2. Structure d'amortissement viscoélastique selon la revendication 1, dans laquelle la structure est tubulaire et toutes les couches (20, 22, 24, 26, 28, 20', 22', 26') sont annulaires.

3. Structure d'amortissement viscoélastique selon la revendication 2, dans laquelle les deux couches (22, 24; 22', 24) du second matériau élastique sont des couches continues en contact avec la couche de matériau viscoélastique (20; 20') et les deux couches segmentées (26, 28; 26', 28) sont formées en contact avec les deux couches (22, 24; 22', 24) du second matériau élastique.

4. Structure d'amortissement viscoélastique selon la revendication 3, dans laquelle les couches segmentées (26, 28) comprennent des fibres orientées de façon prédominante en direction axiale pour transmettre des charges axiales, et les deux couches (22, 24) du second matériau élastique présentent une faible rigidité et une faible résistance dans la direction axiale.

5. Structure d'amortissement viscoélastique selon la revendication 4, dans laquelle les deux couches (22, 24) du second matériau élastique comprennent des fibres qui sont alignées de façon prédominante dans des directions inclinées par rapport à l'axe longitudinal dé la structure.

6. Structure d'amortissement viscoélastique selon la revendication 3, dans laquelle les couches segmentées (26', 28) comprennent des fibres orientées de façon prédominante non axialement pour transmettre des charges de cisaillement, et les deux couches (22', 24) du second matériau élastique présentent une faible rigidité et une faible résistance dans une direction transversale à l'axe longitudinal de la structure.

7. Structure d'amortissement viscoélastique selon la revendication 6, dans laquelle les deux couches (22', 24) du second matériau élastique comprennent des fibres qui sont alignées de façon prédominante parallèlement à l'axe longitudinal de la structure.

8. Structure d'amortissement viscoélastique selon la revendication 1, dans laquelle la structure est constituée par une poutre (30, 32, 34), les deux couches (38, 38) du second matériau élastique sont des couches continues en contact avec la couche de matériau viscoélastique (36), et les deux couches segmentées (40, 40) sont formées en contact avec les deux couches (38, 38) du second matériau élastique.

9. Structure d'amortissement viscoélastique selon la revendication 8, dans laquelle les couches segmentées (40, 40) comprennent des fibres orientées de façon prédominante en direction axiale pour transmettre des charges axiales, et les deux couches (38, 38) du second matériau élastique présentent une faible rigidité et une faible résistance dans la direction axiale.

10. Structure d'amortissement viscoélastique selon la revendication 9, dans laquelle les deux couches (38, 38) du second matériau élastique comprennent des fibres qui sont alignées de façon prédominante dans des directions inclinées par rapport à l'axe longitudinal de la structure (30, 32, 34).

11. Structure d'amortissement viscoélastique selon l'une quelconque des revendications précédentes, dans laquelle les interstices entre les segments des couches segmentées (26, 28; 26', 28; 40, 40) présentent un longueur d'interstice égale à un multiple d'une longueur de retard théorique, qui est la distance axiale nécessaire au transfert des contraintes entre un segment de l'une des couches segmentées (26, 28; 26', 28; 40, 40) et la couche adjacente (22, 24; 22', 24; 38, 38) du second matériau élastique, et les segments d'une couche segmentée (26; 26'; 40) recouvrent les segments de l'autre couche segmentée (28; 28. 40) sur une longueur de chevauchement qui est également un multiple de la longueur de retard.

12. Structure d'amortissement viscoélastique selon la revendication 11, dans laquelle la longueur de l'interstice représente approximativement trois fois la longueur de retard, et la longueur du chevauchement est approximativement deux fois celle de la longueur de retard.

10

**13.** Procédé pour amortir des charges dynamiques dans une structure viscoélastique comprenant une couche viscoélastique (20, 20', 36), deux couches segmentées élastiques (26, 28; 26', 28; 40, 40) d'une matériau de rigidité et de résistance élevées dans une direction de charge désirée, et deux couches viscoélastiques continues (22, 24; 22', 24; 38, 38) de faible rigidité et de faible résistance dans la direction désirée de la charge, le procédé comprenant les étapes consistant à appliquer une charge dynamique à la structure dans la direction désirée de la charge, à diriger les forces de charge dynamiques généralement dans la direction de la charge, et en va-et-vient entre les deux couches élastiques segmentées (26, 28; 26', 28; 40, 40), à travers des portions des couches élastiques continues (22, 24; 22', 24; 38, 38) et à travers la couche viscoélastique (20; 20'; 36), à dissiper l'énergie de la charge dynamique dans la couche viscoélastique (20; 20'; 36) par un passage répété des forces de la charge à travers la couche viscoélastique (20; 20'; 36), et à constituer au moins un parcours pour diriger les charges statiques dans la direction de la charge.

FIG. 1
(PRIOR ART)

FIG. 2

26'
22'
20
24'
28'

Torque

C̵L

FIG. 3

FIG. 4

FIG. 5

FIG. 6